# EUROPEAN PATENT APPLICATION

(11) **EP 2 317 698 A1**
(43) Date of publication of application: **04.05.2011**
(21) Application number: 10251723.2
(22) Date of filing: 01.10.2010
(51) Int. Cl.: H04L 12/26, H04L 12/56, H04L 29/06

(54) **Method and apparatus for the efficient correlation of network traffic to related packets**

(30) Priority: 29.10.2009 US 608819
(71) Applicant: Fluke Corporation, Everett, WA 98203 (US)
(72) Inventor: Monk, John, Larkspur, CO 80118 (US); Vogt, Robert, Colorado Springs, CO 80920 (US); Prescott, Dan, Elbert Colorado 80106 (US); Kosbab, Bruce, Colorado Springs, CO 80920 (US)
(74) Representative: Lock, Howard John

(57) **Abstract**

A network analyzer reads network packets and extracts characterizing attributes, grouping patents observed in a given amount of time on common attribute values. Grouped attributes are meta data, written to a database, while packets are written to files. Meta data is stored in the database including links to the physical packets related to the meta data, and a user interface enables query of the meta data and retrieval of related physical packets.

## Description

This invention relates to networking, and more particularly to a system, method and apparatus to correlate network traffic information to the related packets.

In network analysis of complex networks, large amounts of data will be seen by a network analyzer. Analysis of such large amounts of data raises issues in attempting to correlate specific network data groupings, such as network conversations, transactions within a conversation, groups of such entities, applications, etc., with the explicit packets that comprised the original data grouping.

Existing correlation system employ statistics, for example, grouping packets with response times less than a selected value. However, statistics describe network traffic indirectly and it can be desirable to have more explicit correlation.

In accordance with one aspect of the invention, there is provided a system for indexing and storage of network traffic, comprising:
a database of observed network meta data, said meta data including indication of location of stored packets related to the meta data;
a user interface to enable query of the meta data and return of packets relevant to the query.

In accordance with another aspect of this invention, there is provided a network test instrument for indexing and storage of network traffic, comprising:
a network traffic monitor for observing network data and determining meta data based thereon;
a database of the observed network meta data, said meta data including indication of location of stored packets related to the meta data;
a user interface to enable query of the meta data and return of packets relevant to the query.

In accordance with another aspect of this invention, there is provided a method of operating a network test instrument for indexing and storage of network traffic, comprising:
observing network data and determining meta data based thereon;
maintaining a database of the observed network meta data, said meta data including indication of location of stored packets related to the meta data;
providing a user interface to enable query of the meta data and return of packets relevant to the query.

In accordance with another aspect of the invention, a network monitoring system, device and method, network data is analyzed and accounted for in a packet meta data analogue that is annotated with information that describes the particular packet. The meta data may be stored in a relational database so as to provide efficient lookup based on the descriptive characteristics.

It is an advantage of the preferred embodiment of the present invention that it provides an improved network monitor system for efficient correlation of network traffic to related packets.

It is a further advantage of the preferred embodiment of the present invention that it provides an improved network monitor system that determines meta data and stores meta data in a database, as well as storing the physical data and the correlation therebetween.

It is yet another advantage of the preferred embodiment of the present invention that it provides an improved network monitor and system to allow efficient correlation of network traffic to related packets through use of packet meta data.

The subject matter of the present invention is particularly pointed out and distinctly claimed in the concluding portion of this specification. However, both the organization and method of operation, together with further advantages and objects thereof, may best be understood by reference to the following description taken in connection with accompanying drawings wherein like reference characters refer to like elements.
FIG. 1 is a block diagram of a network with monitoring system;
FIG. 2 is a block diagram of a monitor device for efficient indexing and storage of network traffic; and
FIG. 3 is a diagram of the layout and operation of the system

The system according to a preferred embodiment of the present invention comprises a network monitoring system, apparatus and method, where network data is analyzed and characterizing attributes of the packets are extracted and correlated to the particular packets. In a given period of time, packets are grouped on common attribute values and grouped attributes are written to a database, while the physical packets are written to files correlated to the meta data.

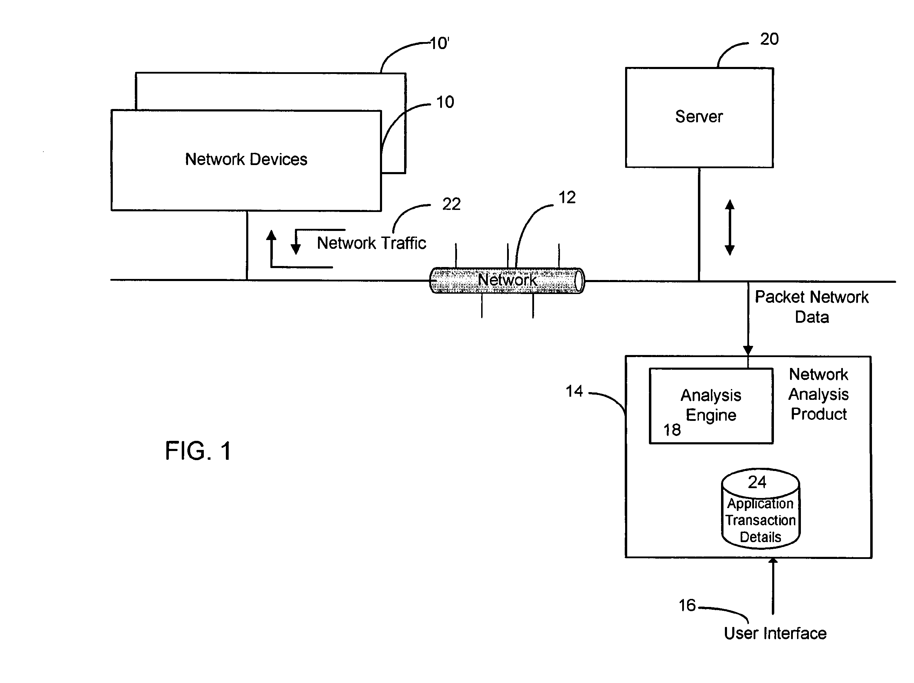

Referring to FIG. 1, a block diagram of a network with an apparatus in accordance with the disclosure herein, a network may comprise plural network devices 10, 10', etc., which communicate over a network 12 by sending and receiving network traffic 22. The traffic may be sent in packet form, with varying protocols and formatting thereof, representing data from a variety of applications and users.

A network analysis product 14 is also connected to the network, and may include a user interface 16 that enables a user to interact with the network analysis product to operate the analysis product and obtain data therefrom, whether at the location of installation or remotely from the physical location of the analysis product network attachment.

The network analysis product comprises hardware and software, CPU, memory, interfaces and the like to operate to connect to and monitor traffic on the network, as well as performing various testing and measurement operations, transmitting and receiving data and the like. When remote, the network analysis product typically is operated by running on a computer or workstation interfaced with the network.

The analysis product comprises an analysis engine 18 which receives the packet network data and interfaces with application transaction details data store 24.

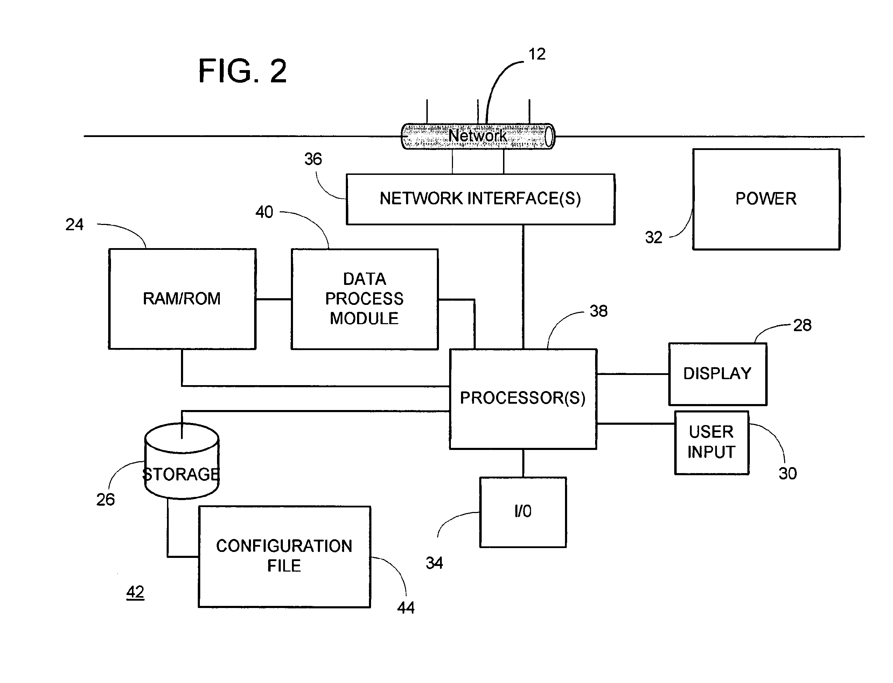

FIG. 2 is a block diagram of a test instrument/analyzer 42 via which the invention can be implemented, wherein the instrument may include network interfaces 36 which attach the device to a network 12 via multiple ports, one or more processors 38 for operating the instrument, memory such as RAM/ROM 24 or persistent storage 26, display 28, user input devices 30 (such as, for example, keyboard, mouse or other pointing devices, touch screen, etc.), power supply 32 which may include battery or AC power supplies, other interface 34 which attaches the device to a network or other external devices (storage, other computer, etc.). Data processing module 40 provides processing of observed network data to provide mixed-mode analysis of network traffic.

In operation, the network test instrument is attached to the network, and observes transmissions on the network to collect information. Under operation of the processor(s) 38, as network traffic is observed, packets are analyzed and determinations are made of components of the packets that characterize the packets, packets having common attributes are grouped and the grouped attributes are stored in a database.

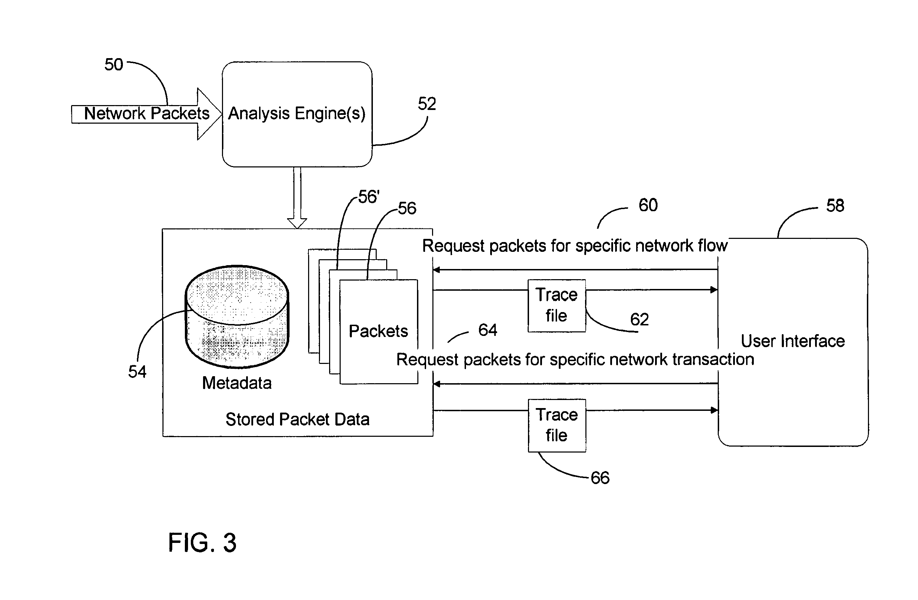

With reference to FIG. 3, a diagram of operation of the system, network packets 50 are received by an analysis engine 52 and are read and characterizing attributes are extracted. Examples of characterizing attributes include, but are not limited to:
- identification of the application that the packet is associated with;
- identification of the flow that the packet is associated with (a flow is characterized as from the beginning to end of an established connection);
- identification of the transaction that the packet is associated with;
- packet start time;
- end time;
- creation time;
- time seen
- uniform resource indicator id;
- port information;
- protocol information;
- client network address information;
- server network address information;
- server id;
- site id.

Packets observed in a finite time period are grouped together on common attribute values and grouped attributes, which are referred to as meta data, are stored to a meta data database 54. The physical packets themselves are written to flat files 56, 56', etc.

The meta data for a packet is additionally annotated with information regarding where the packets are physically stored in files 56, 56', which enables quick retrieval of packets of interest based on meta data retrieved from the database.

In operation, a user interface 58 provides a user the ability to query the meta data database and, for example, requesting packets related to a specific meta data attribute of interest. In a particular example, this can comprise packets related to a specific network flow (request 60). The meta data in the database for the specific network flow includes information as to the location of the stored packets in files 56 related to that flow, and the system retrieves those packet files and returns the trace file 62 to the user with the relevant packets for study or review by the user for analysis of network operation. This can be useful when identifying a particular specific network flow as having some issues related to network performance.

As another example, the user may request packet for a specific network transaction (request 64). The database is queried for meta data related to that transaction and the packet file locations are obtained, and the relevant packets are returned from files 56 as trace file 66 for analysis or other function by the user for network troubleshooting.

Accordingly, packet meta data is stored in a relational database and can be queried based on desired combinations of characteristics to request trace files of packets related to those characteristics. From the information stored with the packet meta data, the physical packets can be obtained from physical storage.

The system, method and apparatus may suitably be implemented within a network test instrument.

While a preferred embodiment of the present invention has been shown and described, it will be apparent to those skilled in the art that many changes and modifications may be made without departing from the invention in its broader aspects. The appended claims are therefore intended to cover all such changes and modifications as fall within the true spirit and scope of the invention.

## Claims

1. A system for indexing and storage of network traffic, comprising:
a database of observed network meta data, said meta data including indication of location of stored packets related to the meta data;
a user interface to enable query of the meta data and return of packets relevant to the query.

2. The system for indexing and storage of network traffic according to claim 1, wherein said meta data is selected from the following:
identification of the application that the packet is associated with, identification of the flow that the packet is associated with, identification of the transaction that the packet is associated with, packet start time, end time, creation time, time seen, uniform resource indicator id, port information, protocol information, client network address information, server network address information, server id and site id.

3. The system according to claim 1 or 2 wherein the meta data for a packet is annotated with information regarding where the packets are physically stored to enable quick retrieval of packets of interest based on meta data retrieved from the database.

4. The system according to claim 1, 2 or 3
wherein the return of packets relevant to the query is in the form of a trace file.

5. A network test instrument for indexing and storage of network traffic, comprising:
a network traffic monitor for observing network data and determining meta data based thereon;
a database of the observed network meta data, said meta data including indication of location of stored packets related to the meta data;
a user interface to enable query of the meta data and return of packets relevant to the query.

6. The network test instrument according to claim 5, wherein said meta data is selected from the following:
identification of the application that the packet is associated with, identification of the flow that the packet is associated with, identification of the transaction that the packet is associated with, packet start time, end time, creation time, time seen, uniform resource indicator id, port information, protocol information, client network address information, server network address information, server id and site id.

7. The network test instrument according to claim 5 or 6 wherein the meta data for a packet is annotated with information regarding where the packets are physically stored to enable quick retrieval of packets of interest based on meta data retrieved from the database.

8. The network test instrument according to claim 5, 6 or 7 wherein the return of packets relevant to the query is in the form of a trace file.

9. A method of operating a network test instrument for indexing and storage of network traffic, comprising:
observing network data and determining meta data based thereon;
maintaining a database of the observed network meta data, said meta data including indication of location of stored packets related to the meta data;
providing a user interface to enable query of the meta data and return of packets relevant to the query.

10. The method according to claim 9, wherein said meta data is selected from the following:
identification of the application that the packet is associated with, identification of the flow that the packet is associated with, identification of the transaction that the packet is associated with, packet start time, end time, creation time, time seen, uniform resource indicator id, port information, protocol information, client network address information, server network address information, server id and site id.

11. The method according to claim 9 or 10 wherein the meta data for a packet is annotated with information regarding where the packets are physically stored to enable quick retrieval of packets of interest based on meta data retrieved from the database.

12. The method according to claim 9, 10 or 11
wherein the return of packets relevant to the query is in the form of a trace file.
